# EUROPEAN PATENT SPECIFICATION

(11) **EP 0 862 943 B1**
(45) Date of publication and mention of the grant of the patent: **03.08.2005**
(21) Application number: 98200576.1
(22) Date of filing: 24.02.1998
(51) Int. Cl.: B01D 63/04, B01D 63/06, B01D 65/00

(54) **Membrane filtration module and membrane filtration system comprising modules of this kind.**
Membranfiltermodul und derartige Module enthaltende Membranfilteranlage
Module de filtration à membranes et système de filtration comprenant de tels modules

(30) Priority: 04.03.1997 NL 1005432
(43) Date of publication of application: 09.09.1998
(73) Proprietor: X-Flow B.V., 7547 TC Enschede (NL)
(72) Inventor: Rekers, Casper Johannes Nicolaas, 7772 JV Hardenberg (NL)
(74) Representative: Volmer, Johannes Cornelis

(56) References cited:
- EP-A- 0 188 224
- EP-A- 0 203 489
- EP-A- 0 282 355
- EP-A- 0 606 933
- EP-A- 0 668 097
- EP-A- 0 761 292
- NL-C- 1 003 309
- US-A- 4 061 821
- PATENT ABSTRACTS OF JAPAN vol. 12, no. 132 (C-490), & JP 62 250908 A
- PATENT ABSTRACTS OF JAPAN vol. 12, no. 333 (C-526), & JP 63 093308 A
- PATENT ABSTRACTS OF JAPAN vol. 012, no. 132 (C-490), & JP 62 250908 A
- PATENT ABSTRACTS OF JAPAN vol. 012, no. 333 (C-526), & JP 63 093308 A

## Description

The invention relates to a membrane filtration module, comprising a housing, a semi-permeable membrane, which is accommodated in the housing and has a liquid side for the introduction of liquid to be filtered and a concentrate side opposite the liquid side, as well as a permeate chamber, which surrounds the membrane and is in communication with a permeate-discharge line for discharging permeate.

A membrane filtration module of this kind is known in the field and from NL-C-1,003,309. In known membrane filtration systems, a plurality of modules are often disposed in series in a single housing of the system or parallel to one another. In a known system with modules connected in series, the housing has (sometimes radial) feed openings on either side for the purpose of feeding in the liquid to be filtered. The modules are disposed in an accurately fitting manner in the housing, with spaces, into which the concentrate flows out, present between the modules. These spaces also serve as liquid-feed chambers for a subsequent module, as seen in the direction of flow. The perforated permeate-discharge line extends centrally through each module and through the spaces, those parts of the permeate-discharge line which are situated in the spaces not having any perforations, or else the perforations in those parts being sealed off. This discharge line emerges axially outwards on both sides of the housing of the system. A semi-permeable membrane, such as a bundle of hollow fibres, a number of outside textile reinforced hollow fibre tubes or a membrane pattern wound into a spiral, is situated in the housing of the module. The permeate chamber is the chamber around the membrane, which is delimited by the housing. These known systems are used with membranes which are suitable for microfiltration, ultrafiltration, nanofiltration or for reverse osmosis.

It has been found that if the membrane consists of hollow fibres or small outside textile reinforced hollow fibre tubes with a smooth outer surface, the flow of liquid between the hollow fibres and/or outside textile reinforced hollow fibre tubes and/or through the perforations of the permeate-discharge line is inhibited as a result of the radial transport of permeate towards the central permeate discharge becoming increasingly strong towards the inside resulting in a decrease in the filtering action of the system. For this reason, there are features in known modules for enhancing the radial transport of permeate. However, these features have the drawback that they are difficult to produce and take up space which could otherwise be used for fitting a membrane.

Another phenomenon which is inherent to filtration is that during the filtration (separation, purification or concentration) contaminants from the liquid are deposited on the membrane and in the spaces, thus impairing the action of the system. In order to keep the filtering efficiency of a system of this kind at an acceptable level, the modules have to be rinsed periodically. During this rinsing operation, rinsing liquid is introduced via the permeate-discharge line into the modules, rinsing back through the membrane and into the spaces, in order to remove deposited contaminants. The rinsing liquid, together with entrained contaminants, flows out of the system via the liquid-feed openings, which therefore serve as discharge openings during rinsing. However, there is a risk when flushing that contaminants present in the spaces, at least one dimension of which contaminants has grown, for example as a result of agglomeration, larger than the dimension of the openings in the fibres or small tubes of the membrane, will block the access to the membrane for contaminants of smaller dimensions, and it will thus be impossible to carry out an efficient rinsing operation. Moreover, these large agglomerates can themselves also not be removed from the system via the membrane. Attempts to overcome this problem are known in the prior art and comprise, inter alia, the arrangement of separate rinsing-liquid discharge openings in the spaces as shown in NL-C-1003309, but these require relatively expensive features, such as lines and valves. Another solution consists in arranging one or more tubes, which extend from the liquid side to the concentrate side and have a relatively great diameter, in the interior of the module, so that these contaminants can easily be removed from the system. However, a major drawback of this design is that the effective membrane surface in a membrane filtration module is reduced as a result of the presence of these additional tubes.

EP-A-0 203 489 discloses a hollow fibre membrane device having a central feed distribution means, around which a plurality of hollow fibre membranes are arranged. Inner fibres enveloped by a constraining wrap are assembled between the distribution means and the hollow fibre membranes. In this known device the permeate flows through the lumens of the hollow fibre membranes towards header spaces, situated at both ends of the device, and is subsequently removed via outlets. EP-A1-0,606,933 discloses an outside textile reinforced hollow fibre tube for membrane filtration.

The object of the present invention is to provide a membrane filtration module with which the abovementioned drawbacks are overcome.

A further object of the invention is to provide a membrane filtration module which can be rinsed efficiently and easily.

Yet another object of the invention is to provide a membrane filtration module which makes it possible to ensure effective and simple discharge of permeate.

The membrane filtration module of the type described above according to the invention as claimed in claim 1 is characterized in that the membrane comprises a first membrane component with a first diameter as well as a second membrane component with a second diameter, the second diameter being greater than the first diameter, wherein the second membrane is arranged in a suitable location as defined in claim 1.

According to the invention, the membrane comprises at least two membrane components with different diameters, the presence of the second membrane component with a greater diameter than the other membrane component, when it is arranged in a suitable location, prevents the other membrane component (with the smaller diameter) from becoming too tightly packed.

JP-62,250,908 and JP-63,093,308 disclose modules for membrane filtration, which comprise a bundle of hollow yarns in a cylindrical housing. The hollow yarns are open at both ends. The purpose, as stated in both publications, is to reduce resistance and to enhance air washability of a hollow yarn type filter. Liquid to be filtered is introduced into the cylindrical housing through openings in the circumferential wall of the cylinder. The filtrate enters the yarns, and collects in a liquid collection chamber. From this liquid collection chamber, the filtrate is discharged upwards through a porous pipe, in the case of JP-63093308, and through large hollow yarns in the case of JP-62,250,908. The porous pipe, large hollow yarns respectively, are held in the membrane cylindrical housing, and also act as filter, so filtrate can also directly enter the porous pipe, large hollow yarns respectively.

In contrast to the features used in the prior art, the membrane components with different diameters can be arranged in a module in a relatively simple manner. In addition, the second membrane component itself contributes to the total membrane surface, which represents an advantage over the known tubes without any filtering action. When rinsing the module with rinsing liquid, the second membrane component with a relatively large diameter also allows particles of a larger diameter than the openings in the first membrane component to be rinsed back out of the spaces via the large membrane component and towards the liquid-feed openings, which are then serving as discharge openings, thus removing these particles from the system. Another important advantage is that the relatively large membrane component equalizes the pressure on the liquid side and the concentrate side of the module. In a membrane, a pressure drop occurs as a result of the axial transportation of liquid in the membrane, both during filtration and during rinsing. This pressure drop is one of the factors determining the design of the module, in particular its dimensions, which module must not be so large that the pressure in downstream parts of the membrane becomes so low that there is no, or scarcely any, filtration or rinsing back in those parts of the membrane. However, the pressure drop in the membrane component of relatively large diameter is less than in the other membrane component of smaller diameter, so that the hydrostatic pressure on both sides is evened out without a significant loss of effective membrane surface and the working pressure in the membrane becomes higher. As a result, it is also possible to increase the length of the module, thus providing an economic advantage.

The membrane components of different diameters may be of the same type, for example fine and coarse hollow fibres, or outside textile reinforced hollow fibre tubes with different diameters. Combinations of different types are also possible, as will be illustrated below.

Preferably, the second component with the large internal diameter is selected from outside textile reinforced hollow fibre tubes or reinforced hollow fibres. The internal diameter of the outside textile reinforced hollow fibre tubes will generally lie in the range from 4-30 mm, a diameter towards the lower end of this range having proven favourable in practice. Reinforced hollow fibres are textile-reinforced capillaries which have a larger diameter (in the range from about 1-3 mm) than conventional hollow fibres. This larger diameter can be obtained by virtue of the reinforcing textile layer, which is disposed around the outer circumference of the hollow fibres. This textile layer also ensures that permeate is discharged efficiently.

A preferred material for the first membrane component of relatively small diameter comprises bundles of hollow fibres, which usually have a diameter of less than 3mm.

Advantageously, the diameter ratio of the first membrane component to the second membrane component is at least 1:2, a ratio in the order of magnitude of about 1:10 having proven particularly suitable.

A preferred embodiment of the filtration module according to the invention comprises the abovementioned outside textile reinforced hollow fibre tube and bundles of hollow fibres. The position in the membrane of the membrane component of relatively large diameter with respect to the bundles of hollow fibres is such that it is not possible for the flow of permeate between the components of the membrane towards the permeate-discharge line to be impeded. A preferred position for the second component is around the circumference of a central permeate-discharge line. If the permeate discharge takes place via the wall of the housing, or in this way in combination with a central discharge, as will be discussed in more detail below, the second membrane component of relatively large diameter is advantageously (also) disposed in the region of the inner wall of the housing. Such arrangements of the assembled membrane are easy to realise in technical terms.

To assist with the discharge of permeate, the wall of the housing advantageously comprises one or more longitudinal channels which are closed towards the liquid side and concentrate side and are in open communication with the permeate chamber. These channels (also referred to below as permeate channels) allow the permeate to be discharged not only towards the central permeate discharge but also towards the outer casing. As a result, the radial transportation (directed from the outside inwards) of liquid through, for example, the bundle of fibres as first component is considerably reduced, thus preventing the bundle from being pressed directly together and the flow of liquid from being impeded. Moreover, the entire internal volume of the housing remains available for accommodating the membrane, so that the effective membrane surface is not reduced by the presence of the additional permeate channels. The housing is produced in the usual way from plastic or metal. An important advantage of a housing with internal wall channels made of plastic is that a housing of this kind can be produced easily using suitable extrusion techniques (cf. for example NL-A-7500386), and can be processed further using simple techniques in order to form the connection between the channels and the interior. In addition, a product of this kind with channels which are closed towards the inside is already commercially available as a standard tube in standard dimensions suitable for use as a module housing. However, in this case the cavities in the wall do not act as flow channels for the passage of a liquid, but rather they are provided in order to reduce the weight. An example is (PVC) tubes, which are marketed by Wavin under the brandname "WAVIHOL". The dimensions of these cavities are sufficiently large to serve as permeate channels. The shape, number and position of the channels in the wall of the housing are not critical. Round, square, rectangular, hexagonal and oval shapes are some of the possibilities. Usually, a plurality of channels are present, which are distributed evenly over the wall. The connection between the channels and the interior can easily be produced in the known tube, for example by milling open part of the inner wall or drilling into this wall as far as the channels. If the channels are used as permeate channels, they are advantageously not in communication with the liquid side and concentrate side of the module, but rather are closed off towards the liquid side and concentrate side. In order to discharge the permeate situated in the channels further on, these channels are in communication with a permeate-discharge line at one or both ends, advantageously at the end situated on the concentrate side. If the total capacity of these permeate channels is sufficiently great, a central permeate-discharge line for the filtering action may even be superfluous. In that case, the channels are preferably in communication with a permeate-collection line, which is present outside the housing, via discharge openings in the outer wall of the housing. However, the presence of the central permeate-discharge line is advantageous for rinsing the module.

In order to assist with the removal of relatively large contaminants from the spaces, according to a further embodiment of the membrane filtration module according to the invention, the wall of the housing comprises one or more rinsing channels with openings at both ends. This embodiment is particularly suitable for use in a membrane filtration system with filtration modules connected in series within one housing. These rinsing channels in the wall of the housing have dimensions which are such that the large dirt particles can easily be discharged through these channels, while the whole of the interior of the housing once more remains available for the semi-permeable membrane, so that the filtering action is not affected significantly by the presence of this rinsing channel or these rinsing channels. These rinsing channels form an open connection between the liquid side and the concentrate side of the module.

If the tube described above is used as the module housing, these rinsing channels are already present and to form the permeate channels it is merely necessary to seal off a number of these channels at both ends and to produce connections between the cavities and the interior.

However, the presence of these rinsing channels is also beneficial during the actual filtering, since they equalize the pressure on either side of a module, as explained above with regard to the second membrane component of large diameter.

The invention also relates to a membrane filtration system having a liquid feed and a permeate discharge, which comprises one or more membrane filtration modules according to the invention.

The invention will be explained below with reference to the following drawing, in which:
Fig. 1 shows a diagrammatic longitudinal section through a membrane filtration system having a plurality of membrane filtration modules according to the invention;
Fig. 2 shows a cross-section of the membrane filtration module illustrated in Fig. 1;
Fig. 3 shows a cross-section of a further embodiment of a housing of a membrane filtration module according to the invention;
Fig. 4 shows a cross-section of an embodiment which has been modified further of a housing of a membrane filtration module according to the invention;
Fig. 5 shows a cross-section through another embodiment of a membrane filtration module according to the invention; and
Fig. 6 shows a longitudinal section through the embodiment illustrated in Fig. 5 of a membrane filtration module according to the invention.

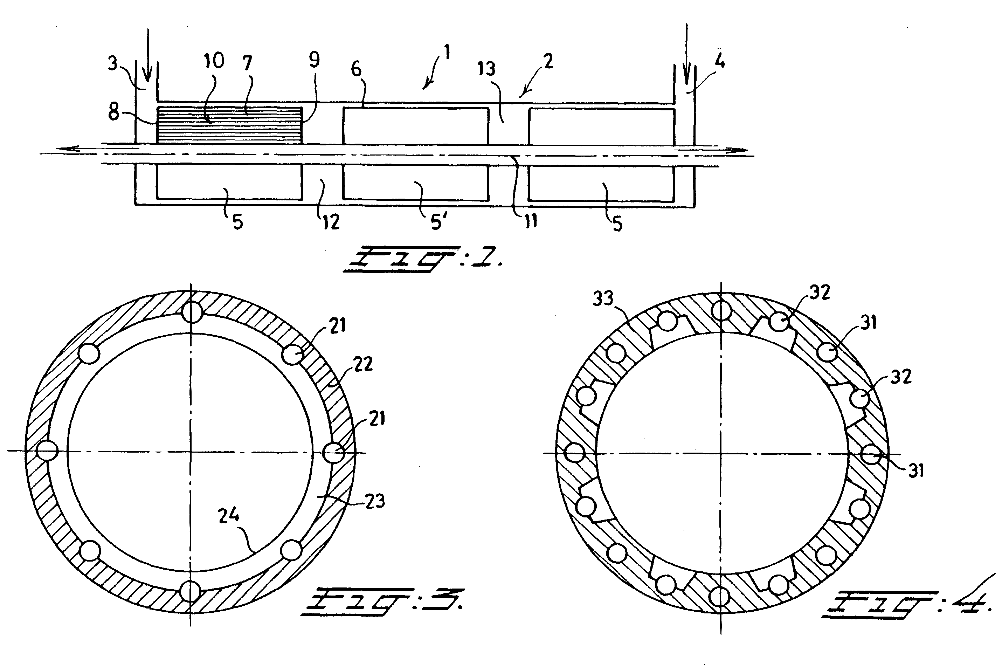

Fig. 1 shows a diagrammatic section through a membrane filtration system 1. This system 1 comprises a housing 2 with radial liquid-feed openings 3 and 4 in the region of both its ends, which liquid-feed openings may also serve as, optionally intermittent, rinsing-liquid discharge openings. Three membrane filtration modules are disposed in an accurately fitting manner in the housing 2 of the system 1 illustrated, the two outer modules of which are denoted by reference numeral 5 and the central module of which is denoted by reference numeral 5'. Each module 5 comprises a housing 6, the structure of which will be explained in more detail below with reference to the other figures. A semi-permeable membrane 7 (illustrated by thin horizontal lines) is situated in the housing 6. The liquid side of the membrane is indicated by reference numeral 8, and the concentrate side by reference numeral 9. During filtration, a liquid, which is to be filtered and is fed via the liquid-feed openings 3 and 4, is separated in the module 5 into a permeate, which passes through the membrane 7 and into a permeate chamber 10, and a concentrate, which does not pass through the membrane 7. The permeate flows out of the permeate chamber 10 and into a permeate-discharge line 11, which is partially provided with perforations. The permeate from all the modules 5 is collected in this line 11 and then discharged at one or both ends of the system 1. The concentrate flows out of the filter modules 5 into spaces 12 and 13 and then into the central membrane filtration module 5' for further separation, after which it is removed from the system 1 by being rinsed back via the liquid-feed openings 3 and/or 4, which are now functioning as concentrate-discharge openings. The ends of the membrane 7 are fixed in the housing 6 in a manner known per se.

As described above, there is a risk that during filtration the hollow fibres or outside textile reinforced hollow fibre tubes of a conventional membrane will be pressed against one another and against a permeate-discharge line in such a way that liquid flow of the permeate within the module is impeded.

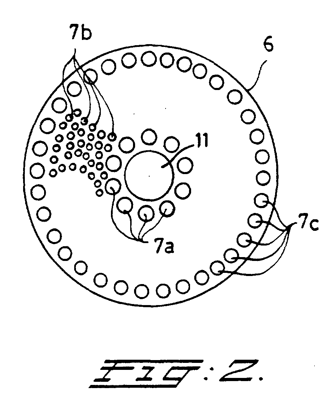

According to one embodiment of the invention, a number of outside textile reinforced hollow fibre tubes 7a of relatively large diameter are disposed around the central permeate-discharge line 11, in order to ensure the radial transportation of liquid from bundles of hollow fibres 7b of relatively small diameter towards the permeate-discharge line 11, as illustrated in Fig. 2. If the wall of the module housing 6 also comprises permeate channels (not shown in Fig. 2), outside textile reinforced hollow fibre tubes 7c of relatively large diameter are advantageously also disposed in the region of the inner wall of the housing 6, in order to ensure transportation of liquid towards these permeate channels. The diameter of the outside textile reinforced hollow fibre tubes 7a and 7c is relatively large (approximately 5 mm) by comparison with that of the membrane component 7b, thus preventing them from being packed tightly together, which is the cause of radial liquid blockage. Furthermore, these outside textile reinforced hollow fibre tubes 7a and 7c of large diameter contribute to the equalization of the pressure on either side of the module and to the removal of accumulated contaminants from the space by means of rinsing.

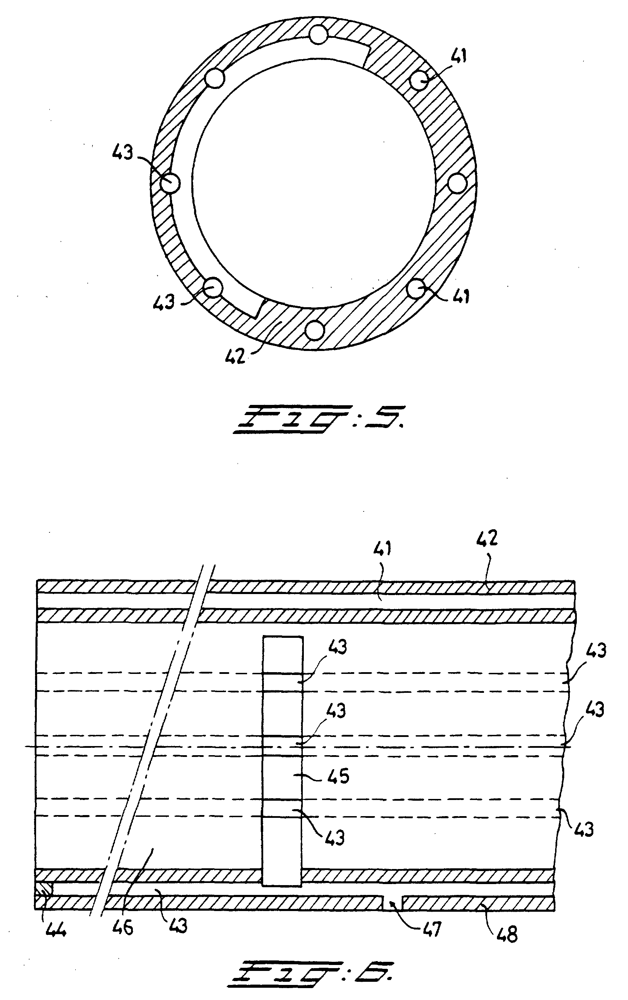

In the embodiment of a module according to the invention illustrated in Fig. 3, the housing 6 also comprises one or more permeate channels 21, which are present in the wall 22 of the housing 6. For the sake of convenience, the central permeate discharge, as well as the assembled membrane, are omitted in this figure and in those which are to be discussed below. These channels 21 are in open communication with the permeate chamber 10 and are closed off on the liquid side and concentrate side of the module, so that the liquid to be purified cannot flow directly into the permeate channels 21. In the embodiment illustrated in this figure, this open connection is formed by a groove 23, which is arranged over the entire circumference of the inner wall 24 of the housing. These permeate channels assist with the discharge of permeate from the module. On the concentrate side, the permeate channels 21 open out into a connecting piece (not shown) which is coupled to the central permeate-discharge line.

Over the course of time, the membrane 7 will become so contaminated that it needs to be rinsed. To this end, rinsing liquid is fed to the permeate-discharge line 11, which liquid flows, through the perforations in this line, into the permeate chamber 10 and, via the membrane 7, both towards the spaces 12 and 13 and the liquid-feed openings 3 and 4. Contaminants of dimensions larger than the openings in the membrane which have accumulated in the spaces 12 and 13 cannot, however, be removed via the membrane 7, since this dirt is too large and will also block the access to the membrane 7 of smaller dirt particles.

Advantageously, their removal can be facilitated with the aid of rinsing channels 31 (cf. Fig. 4), which, like the permeate channels 32, are present in the wall 33 of the housing 6 of the modules 5. These channels 31 of sufficiently large dimensions connect the spaces 12 and 13 to the feed chambers on the other side (liquid side) of the membrane filtration modules 5. The rinsing liquid introduced entrains the large contaminants through these channels 31, resulting in efficient cleaning of the membrane filtration system. In the configuration illustrated in Fig. 4, the rinsing channels 31 and permeate channels 32 alternate. However, other configurations, such as in groups (Fig. 5), are also possible.

The required networks of lines with associated valves and pumps for the liquid to be filtered and the rinsing liquid are not illustrated in the drawing for reasons of simplicity. Furthermore, it should be noted that the drawing is not to scale.

A further modification of the wall of the housing is illustrated in Fig. 5 and 6. The housing 6 comprises rinsing channels 41 in the wall 42, which connect the liquid side to the concentrate side, as well as permeate channels 43, which are closed at both ends, for example by a plug 44. The channels of each type are in groups in the wall 42. To discharge permeate from the permeate chamber, a groove 45 is provided in the inner wall 46 of the housing 6. In the situation illustrated, this groove 45 extends over half the internal circumference and has a depth which reaches the permeate channels 43. Furthermore, the permeate channels 43 are in communication, via discharge openings 47 in the outer wall 48 of the housing 6, with a permeate-collection line (not shown), which is positioned around the housing 6. Only one groove 45 is shown in Fig. 5. However, the person skilled in the art will understand that there will usually be a plurality of grooves distributed along the length of the housing 6.

## Claims

1. Membrane filtration module (5), comprising a housing (6), a semi-permeable membrane (7), which is accommodated in the housing (6) and has a liquid side (8) for the introduction of liquid to be filtered and a concentrate side (9) opposite the liquid side (8), as well as a permeate chamber (10), which surrounds the membrane (7) and is in communication with a permeate-discharge line (11) for discharging permeate, **characterized in that** the membrane (7) comprises a first membrane component (7b) with a first diameter as well as a second membrane component (7a, 7c) with a second diameter, the second diameter being greater than the first diameter, the first and second membrane components being hollow fibres and/or hollow fibre tubes, and that the second membrane component (7a) with the second diameter is disposed around the circumference of the permeate-discharge line (11) and/or in the region of the inner wall of the housing (6).

2. Membrane filtration module according to claim 1, **characterized in that** the second membrane component (7a, 7c) is selected from outside textile reinforced hollow fibre tubes or reinforced hollow fibres.

3. Module according to claim 1 or 2, **characterized in that** the first membrane component (7b) is composed of bundles of hollow fibres.

4. Module according to one of the preceding claims, **characterized in that** the diameter ratio between the first membrane component (7b) and the second membrane component (7a, 7c) is at least 1:2.

5. Module according to one of the preceding claims, **characterized in that** the wall (22; 33; 42) of the housing (6) comprises one or more channels (21; 32; 43), which are closed towards the liquid side (8) and concentrate side (9) and are in communication with the permeate chamber (10).

6. Module according to claim 5, **characterized in that** the inner wall (24; 46) of the housing (6) is partially provided with a groove (23; 45), the depth of which reaches as far as the channels (21; 32; 43)

7. Module according to claim 5 or 6, **characterized in that** at least one of those ends of the channels (21; 32) which are situated at the end sides is in communication with a permeate discharge line (11).

8. Module according to one of claims 5-7, **characterized in that** the channels (43) are in communication with a permeate-collection line, which is present outside the housing (6), via discharge openings (47) in the outer wall (48) of the housing (6).

9. Module according to one of the preceding claims, **characterized in that** the wall (22; 33; 42) of the housing (6) also comprises one or more rinsing channels (21; 31; 41) with openings on both end sides.

10. Membrane filtration system (1) having a liquid feed (3, 4) and a permeate discharge (11), as well as at least one membrane filtration module (5, 5'), **characterized in that** the system comprises a membrane filtration module according to one of the preceding claims 1-9.

## Patentansprüche

1. Membran-Filtriermodul (5), das ein Gehäuse (6), eine halbdurchlässige Membran (7), die in dem Gehäuse (6) aufgenommen ist und eine Flüssigkeits-Seite (8) zum Einleiten von zu filtrierender Flüssigkeit sowie eine Konzentrat-Seite (9) gegenüber der Flüssigkeits-Seite (8) hat, und eine Permeat-Kammer (10) umfasst, die die Membran (7) umgibt und in Verbindung mit einer Permeat-Abflussleitung (11) zum Abfließen von Permeat steht, **dadurch gekennzeichnet, dass** die Membran (7) eine erste Membran-Komponente (7b) mit einem ersten Durchmesser sowie eine zweite Membran-Komponente (7a, 7b) mit einem zweiten Durchmesser umfasst, wobei der zweite Durchmesser gröber ist als der erste Durchmesser und die erste sowie die zweite Membran-Komponente hohle Fasern und/oder hohle Faserröhren sind, und dass die zweite Membran-Komponente (7a, 7c) mit dem zweiten Durchmesser um den Umfang der Permeat-Abflussleitung (11) herum und/oder im Bereich der Innenwand des Gehäuses (6) angeordnet ist.

2. Membran-Filtriermodul nach Anspruch1, **dadurch gekennzeichnet, dass** die zweite Membran-Komponente (7a, 7c) aus Außentextilverstärkungs-Hohlfaserröhren oder verstärkten Hohlfasern ausgewählt wird.

3. Modul nach Anspruch1 oder 2, **dadurch gekennzeichnet, dass** die erste Membran-Komponente (7b) aus bündeln von Hohlfasern besteht.

4. Modul nach einem der vorangehenden Ansprüche, **dadurch gekennzeichnet, dass** das Durchmesserverhältnis zwischen der ersten Membran-Komponente (7b) und der zweiten Membran-Komponente (7a, 7c) wenigstens 1:2 beträgt.

5. Modul nach einem der vorangehenden Ansprüche, **dadurch gekennzeichnet, dass** die Wand (22; 33; 42) des Gehäuses (6) einen oder mehere Kanäle (21; 32; 43) umfasst, die zur Flüssigkeits-Seite (8) und zur Konzentrat-Seite (9) hin geschlossen sind und in Verbindung mit der Permeat-Kammer (10) stehen.

6. Modul nach Anspruch 5, **dadurch gekennzeichnet, dass** die Innenwand (24; 46) des Gehäuses (6) teilweise mit einer Nut (23; 45) versehen ist, deren Tiefe soweit wie die Kanäle (21; 32; 43) reicht.

7. Modul nach Anspruch 5 oder 6, **dadurch gekennzeichnet, dass** wenigstens eines der Enden der Kanäle (21; 32), die sich an den Endseiten befinden, mit einer Permeat-Abflussleitung (11) in Verbindung steht.

8. Modul nach einem der Ansprüche 5-7, **dadurch gekennzeichnet, dass** die Kanäle (43) über Abflussöffnungen (47) in der Außenwand (48) des Gehäuses (6) mit einer Permeat-Sammelleitung in Verbindung stehen, die außerhalb des Gehäuses (6) vorhanden ist.

9. Modul nach einem der vorangehenden Ansprüche, **dadurch gekennzeichnet, dass** die Wand (22; 33; 42) des Gehäuses (6) auch einen oder mehrere Spülkanäle (32; 31; 41) mit Öffnungen an beiden Endseiten umfasst.

10. Membran-Filtriersystem (1) mit einer Flüssigkeitszufuhr (3, 4) und einem Permeat-Abfluss (11) sowie wenigstens einem Membran-Filtriermodul (5, 5'), **dadurch gekennzeichnet, dass** das System ein Membran-Filtriermodul nach einem der vorangehenden Ansprüche 1-9 umfasst.

## Revendications

1. Module de filtration par membrane (5), comprenant une enceinte (6), une membrane semi-perméable (7) qui est placée dans l'enceinte (6) et comportant un côté en contact avec le liquide (8) où est introduit le liquide à filtrer et un côté en contact avec le concentré (9) du coté opposé au côté liquide (8), ainsi qu'une chambre de permeat (10), qui entoure la membrane (7) et qui communique avec la ligne de permeat/décharge (11) pour décharger le permeat, **caractérisé en ce que** la membrane (7) comporte un premier élément de membrane (7b) ayant un premier diamètre et un deuxième élément de membrane (7a, 7c) ayant un deuxième diamètre, ce deuxième diamètre étant plus grand que le premier diamètre, les premiers et deuxièmes éléments de membrane comprenant des fibres creuses et/ou des tubes de fibres creuses, le deuxième élément de membrane (7a) ainsi que le deuxième diamètre sont disposés autour de la circonférence de la ligne de permeat/décharge (11), et/ou dans la région de la paroi intérieure de l'enceinte (6).

2. Module de filtration par membrane selon la revendication 1, **caractérisé en ce que** le deuxième élément de membrane (7a, 7c) est choisi parmi les tubes de fibre creuses renforcés par des textiles extérieurs ou des fibres creuses renforcées.

3. Module selon la revendication 1 ou 2, **caractérisé en ce que** le premier élément de membrane (7b) se compose de faisceaux de fibres creuses.

4. Module selon une des revendications précédentes, **caractérisé en ce que** le rapport des diamètres entre le premier élément de membrane (7b) et le deuxième élément de membrane (7a, 7c) est au moins 1 sur 2

5. Module selon une des revendications précédentes, **caractérisé en ce que** la paroi (22 ; 33 ; 42) de l'enceinte (6) comporte un ou plusieurs canaux (21 ; 32; 43), qui sont fermés en allant vers le côté du liquide (8) et du côté concentré (9) et sont en communication avec la chambre de permeat (10).

6. Module selon la revendication 5, **caractérisé en ce que** la paroi intérieure (24 ; 46) du logement (6) comprend par endroit une cannelure (23 ; 45), dont la profondeur va jusqu'aux canaux (21 ; 32 ; 43).

7. Module selon la revendication 5 ou 6, **caractérisé en ce que** au moins une des extrémités de canaux (21 ; 32) qui sont situés aux extrémités est en communication avec une ligne de permeat/décharge (11).

8. Module selon une des revendications 5 à 7, **caractérisé en ce que** les canaux (43) sont en communication avec une ligne de permeat/récupération, qui est présente en dehors de l'enceinte (6), par l'intermédiaire d'ouvertures de décharge (47) de la paroi externe (48) de l'enceinte (6).

9. Module selon une des revendications précédentes, **caractérisé en ce que** la paroi (22 ; 33 ; 42) de la cavité (6) comporte également un ou plusieurs canaux de rinçage (21 ; 31 ; 41) avec des ouvertures des deux côtés d'extrémité.

10. Système de filtration par membrane (1) ayant une alimentation liquide (3, 4) et une décharge de permeat (11), ainsi qu'au moins un module de filtration par membrane (5, 5 '), **caractérisé en ce que** le système comporte un module de filtration par membrane selon une des revendications précédentes 1-9.
